# EUROPEAN PATENT APPLICATION

(11) **EP 4 199 526 A1**
(43) Date of publication of application: **21.06.2023**
(21) Application number: 20952890.0
(22) Date of filing: 14.09.2020
(51) Int. Cl.: H04N 21/60

(54) **COMMUNICATION METHOD AND APPARATUS**

(71) Applicant: Huawei Technologies Co., Ltd., Shenzhen, Guangdong 518129 (CN)
(72) Inventor: HUANG, Qufang, Shenzhen, Guangdong 518129 (CN); WEI, Yuejun, Shenzhen, Guangdong 518129 (CN); YANG, Weiqiang, Shenzhen, Guangdong 518129 (CN); LI, Nijun, Shenzhen, Guangdong 518129 (CN)
(74) Representative: Pfenning, Meinig & Partner mbB
(86) International application number: PCT/CN2020/115045
(87) International publication number: WO 2022/052102

(57) **Abstract**

A communication method and an apparatus are provided. The method includes: A terminal device receives at least one video frame from a network device; the terminal device determines a video frame parameter based on the at least one video frame; and the terminal device sends the video frame parameter to the network device, so that the network device can learn of a receiving status of a downlink video frame, to optimize transmission of the downlink video frame.

## Description

### TECHNICAL FIELD

This application relates to the field of communication technologies, and in particular, to a communication method and an apparatus.

### BACKGROUND

In an extended reality (extended reality, XR) service scenario, a sensor in a helmet may sense a location, an action change, and the like of a user, and generate user information including a field of view, a line of sight, a movement rate, and the like. The user information may be transmitted to an XR server in an uplink transmission manner. An uplink transmission path may be the helmet -> a terminal device -> a wireless network -> the XR server. The XR server may generate new video data based on information such as the location and the line of sight of the user and a scenario in which the user is in a game or a real scene. The new video data may be transmitted to the helmet in a downlink transmission manner. A downlink transmission path may be the XR server -> the wireless network -> the terminal device -> the helmet, and finally the foregoing video data is displayed to the user through the helmet. For example, the wireless network is a 3rd generation partnership project (3rd generation partnership project, 3GPP) network, for example, a long term evolution (long term evolution, LTE) network or the 5th generation (the 5th generation, 5G) network. Because a data volume of video frames for downlink transmission is generally large, how to optimize a downlink transmission manner is a technical problem to be resolved in this application.

### SUMMARY

This application provides a communication method and an apparatus. After receiving a downlink video frame, a terminal device may feed back a frame parameter of the downlink video frame to a network device, to optimize transmission of the downlink video frame.

According to a first aspect, a communication method is provided. The method is performed by a terminal device, or may be performed by a component (a chip, a circuit, or the like) disposed in the terminal device. The method includes: The terminal device receives at least one video frame from a network device; the terminal device determines a video frame parameter based on the at least one video frame; and the terminal device sends the video frame parameter to the network device. Optionally, the terminal device may report a receiving status of the video frame, that is, the foregoing video frame parameter, by using a video frame as a granularity.

Through implementation of the foregoing method, the terminal device determines the video frame parameter based on the received video frame, and sends the video frame parameter to the network device, so that the network device can learn of the receiving status of the downlink video frame, to optimize downlink transmission of the video frame.

In a possible design, the video frame parameter includes at least one of the following: a spread delay parameter, a frame gap parameter, a packet loss parameter, a late parameter, and base layer and enhancement layer parameters.

Through implementation of the foregoing method, the video frame parameter reported by the terminal device intuitively and accurately displays the receiving status of the downlink video frame in different dimensions, so that the network device optimizes transmission of the downlink video frame.

Optionally, the spread delay parameter indicates at least one of the following: a spread delay of a first video frame, an average spread delay of a plurality of video frames, a maximum spread delay of a plurality of video frames, a minimum spread delay of a plurality of video frames, and a variance of spread delays of a plurality of video frames, where the spread delay is a time length from a time when the terminal device successfully receives a first data packet of a video frame to a time when the terminal device successfully receives a last data packet of the video frame, and the first video frame or the plurality of video frames are one or more video frames of the at least one video frame received by the terminal device.

Through implementation of the foregoing method, the terminal device can periodically report the foregoing spread delay parameter, and/or report the spread delay parameter in different conditions. The reporting conditions or content of the reported spread delay parameter may be corresponding or may not be corresponding. On the terminal device side, content and/or a manner of reporting the spread delay parameter may be flexibly set, to meet various reporting requirements.

Optionally, the frame gap parameter indicates at least one of the following: a frame gap between adjacent video frames, an average value of a plurality of frame gaps, a maximum value of a plurality of frame gaps, a minimum value of a plurality of frame gaps, and a variance of a plurality of frame gaps, where the terminal device receives a plurality of video frames from the network device.

Through implementation of the foregoing method, the network device can learn of a status of a frame gap between downlink video frames. For example, if it is found that a frame gap between video frames is unstable, the network device may subsequently increase a size of a buffer to ensure that the video frames are sent at a same interval.

Optionally, the packet loss parameter includes at least one of the following: a quantity of video frames in which packet loss occurs, and a proportion of video frames in which packet loss occurs, where packet loss occurs in K consecutive video frames, and K is a positive integer greater than or equal to 1.

Through implementation of the foregoing method, the network device can learn of a packet loss status of a downlink video frame. If the network device finds that there are a small quantity of video frames in which packet loss occurs, but once packet loss occurs, a plurality of packets are lost, the network device may determine that a deep fading time of a wireless signal is long, and may change a new frequency band to send a video frame, and the like.

In a possible design, the method further includes: The terminal device determines whether packet data convergence protocol PDCP sequence numbers SNs of data packets included in a received video frame are consecutive; and it is determined that packet loss occurs in the video frame when PDCP SNs of the data packets included in the video frame received by the terminal device are non-consecutive.

Through implementation of the foregoing method, the terminal device can determine, depending on whether the PDCP sequence numbers SNs are consecutive, whether packet loss occurs in the video frame. This is easy to implement.

Optionally, the late parameter indicates at least one of the following: a quantity of late video frames, a proportion of late video frames, a time difference between an actual receiving moment and a correct receiving moment of a late video frame, an average value of time differences between actual receiving moments and correct receiving moments of a plurality of late video frames, a maximum value of time differences between actual receiving moments and correct receiving moments of a plurality of late video frames, a minimum value of time differences between actual receiving moments and correct receiving moments of a plurality of late video frames, and a variance of time differences between actual receiving moments and correct receiving moments of a plurality of late video frames.

Through implementation of the foregoing method, the network device can learn of a late status of a downlink video frame, to optimize transmission of the downlink video frame.

In a possible design, each video frame includes base layer data and enhancement layer data; and the base layer and enhancement layer parameters include at least one of the following: a time difference between a time when the terminal device receives base layer data and a time when the terminal device receives enhancement layer data in a second video frame, where the second video frame is a video frame in the at least one video frame; at least one of a quantity of third video frames, a proportion of third video frames, or a quantity of lost packets at an enhancement layer in a third video frame, where the third video frame is a video frame in which packet loss does not occur in base layer data but occurs in enhancement layer data, and the third video frame is a video frame in the at least one video frame; and at least one of a quantity of fourth video frames, a proportion of fourth video frames, or a quantity of lost packets at a base layer in a fourth video frame, where the fourth video frame is a video frame in which packet loss does not occur in enhancement layer data but occurs in base layer data, and the fourth video frame is a video frame in the at least one video frame.

Through implementation of the foregoing method, if the network device finds that a time difference between a base layer and an enhancement layer of a same video frame is excessively large, a transmission interval between the two layers may be reduced subsequently.

Optionally, the video frame includes one or more data slices after network coding is performed, and the video frame parameter further includes at least one of the following: a quantity of data slices that the terminal device needs to receive to successfully decode a video frame and/or a data volume of the data slices; a quantity of data slices that the terminal device needs to receive to successfully decode a base layer of a video frame and/or a data volume of the data slices; and a quantity of data slices that the terminal device needs to receive to successfully decode an enhancement layer of a video frame and/or a data volume of the data slices.

Through implementation of the foregoing method, the network device can adjust, based on a reporting status of the terminal device, a redundancy rate of a base layer or an enhancement layer in a network coding process, and optimize transmission of a downlink video frame.

According to a second aspect, a communication method is provided. The method is performed by a network device or may be performed by a component (a chip, a circuit, or the like) configured in the network device, and includes: The network device sends at least one video frame to a terminal device; and the network device receives a video frame parameter from the terminal device, where the video frame parameter is determined based on the at least one video frame. Optionally, the foregoing video frame parameter may be reported by using a video frame as a granularity.

Through implementation of the foregoing method, the network device can obtain a receiving status of a downlink video frame, to optimize a transmission process of the downlink video frame.

In a possible design, the video frame parameter includes at least one of the following: a spread delay parameter, a frame gap parameter, a packet loss parameter, a late parameter, and base layer and enhancement layer parameters.

Through implementation of the foregoing method, the network device can intuitively and accurately learn a receiving status of a downlink video frame in a plurality of dimensions, to optimize a transmission solution of the downlink video frame.

Optionally, the spread delay parameter indicates at least one of the following: a spread delay of a first video frame, spread delays of a plurality of video frames, a maximum spread delay of a plurality of video frames, a minimum spread delay of a plurality of video frames, and a variance of spread delays of a plurality of video frames, where the spread delay is a time length from a time when the terminal device successfully receives a first data packet of a video frame to a time when the terminal device successfully receives a last data packet of the video frame, and the first video frame or the plurality of video frames are one or more video frames of the at least one video frame received by the terminal device.

Through implementation of the foregoing method, after learning of the foregoing spread delay parameter, the network device can adjust a scheduling policy according to a value of a spread delay. For example, if the spread delay is excessively large, more resources are scheduled for the terminal device, or a modulation and coding scheme (modulation and coding scheme, MCS) is adjusted, to improve user experience. If the spread delay is excessively small, scheduling resources may be reduced, or the MCS may be adjusted, to save resources, and the like.

Optionally, the frame gap parameter indicates at least one of the following: a frame gap between adjacent video frames, an average value of a plurality of frame gaps, a maximum value of a plurality of frame gaps, a minimum value of a plurality of frame gaps, and a variance of a plurality of frame gaps, where the terminal device receives a plurality of video frames from the network device.

Through implementation of the foregoing method, if the network device finds that a frame gap between video frames is unstable, the network device may subsequently increase a size of a buffer buffer to ensure that the video frames are sent at a same interval.

Optionally, the packet loss parameter includes at least one of the following: a quantity of video frames in which packet loss occurs, and a proportion of video frames in which packet loss occurs, where packet loss occurs in K consecutive video frames, and K is a positive integer greater than or equal to 1.

Through implementation of the foregoing method, if the network device finds that there are a small quantity of video frames in which packet loss occurs, but once packet loss occurs, a plurality of packets are lost, the network device determines that a deep fading time of a wireless signal is long, and may change a new frequency band to send a video frame.

Optionally, the late parameter indicates at least one of the following: a quantity of late video frames, a proportion of late video frames, a time difference between an actual receiving moment and a correct receiving moment of a late video frame, an average value of time differences between actual receiving moments and correct receiving moments of a plurality of late video frames, a maximum value of time differences between actual receiving moments and correct receiving moments of a plurality of late video frames, a minimum value of time differences between actual receiving moments and correct receiving moments of a plurality of late video frames, and a variance of time differences between actual receiving moments and correct receiving moments of a plurality of late video frames.

In a possible design, each video frame includes base layer data and enhancement layer data; and the base layer and enhancement layer parameters include at least one of the following: a time difference between a time when the terminal device receives base layer data and a time when the terminal device receives enhancement layer data in a second video frame, where the second video frame is a video frame in the at least one video frame; at least one of a quantity of third video frames, a proportion of third video frames, or a quantity of lost packets at an enhancement layer in a third video frame, where the third video frame is a video frame in which packet loss does not occur in base layer data but occurs in enhancement layer data, and the third video frame is a video frame in the at least one video frame; and at least one of a quantity of fourth video frames, a proportion of fourth video frames, or a quantity of lost packets at a base layer in a fourth video frame, where the fourth video frame is a video frame in which packet loss does not occur in enhancement layer data but occurs in base layer data, and the fourth video frame is a video frame in the at least one video frame.

Through implementation of the foregoing method, if the network device finds that a time difference between a base layer and an enhancement layer of a same video frame is excessively large, a transmission interval between the two layers may be reduced subsequently.

In a possible design, the video frame includes one or more data slices after network coding is performed, and the video frame parameter further includes at least one of the following: a quantity of data slices that the terminal device needs to receive to successfully decode a video frame and/or a data volume of the data slices; a quantity of data slices that the terminal device needs to receive to successfully decode a base layer of a video frame and/or a data volume of the data slices; and a quantity of data slices that the terminal device needs to receive to successfully decode an enhancement layer of a video frame and/or a data volume of the data slices.

Through implementation of the foregoing method, the network device can adjust, based on a reporting status of the terminal device, a redundancy rate of a base layer or an enhancement layer in a network coding process, and optimize transmission of a downlink video frame.

According to a third aspect, an apparatus is provided. For beneficial effects, refer to the descriptions of the first aspect. The apparatus has a function of implementing the behavior in the method embodiment in the first aspect. The function may be implemented by executing corresponding hardware or software. The hardware or the software may include one or more units corresponding to the foregoing functions. In a possible design, the apparatus may include: a communication unit, configured to receive at least one video frame from a network device; and a processing unit, configured to determine a video frame parameter based on the at least one video frame, where the communication unit is further configured to send the video frame parameter to the network device. These units may perform the corresponding functions in the method example in the first aspect. For details, refer to the detailed descriptions in the method example. Details are not described herein again.

According to a fourth aspect, an apparatus is provided. For beneficial effects, refer to the descriptions of the first aspect. The apparatus may be the terminal device in the method in the first aspect, or may be a chip disposed in the terminal device. The apparatus includes a communication interface and a processor, and optionally, further includes a memory. The memory is configured to store a computer program or instructions. The processor is coupled to the memory and the communication interface. When the processor executes the computer program or the instructions, the apparatus is enabled to perform the method performed by the terminal device in the method in the first aspect.

According to a fifth aspect, an apparatus is provided. For beneficial effects, refer to the descriptions of the second aspect. The apparatus has a function of implementing the behavior in the method embodiment in the second aspect. The function may be implemented by executing corresponding hardware or software. The hardware or the software may include one or more units corresponding to the foregoing functions. In a possible design, the apparatus may include: a communication unit, configured to send at least one video frame to a terminal device, where the communication unit is further configured to receive a video frame parameter from the terminal device, and the video frame parameter is determined based on the at least one video frame. Optionally, a processing unit is configured to optimize transmission of a downlink video frame according to the video frame parameter. These units may perform the corresponding functions in the method example in the second aspect. For details, refer to the detailed descriptions in the method example. Details are not described herein again.

According to a sixth aspect, an apparatus is provided. For beneficial effects, refer to the descriptions of the second aspect. The apparatus may be the network device in the second aspect, or a chip disposed in the network device. The apparatus includes a communication interface and a processor, and optionally, further includes a memory. The memory is configured to store a computer program or instructions. The processor is coupled to the memory and the communication interface. When the processor executes the computer program or the instructions, the apparatus is enabled to perform the method performed by the network device in the method embodiment in the second aspect.

According to a seventh aspect, a computer program product is provided. The computer program product includes computer program code. When the computer program code is run, the method performed by the terminal device in the first aspect is performed.

According to an eighth aspect, a computer program product is provided. The computer program product includes computer program code. When the computer program code is run, the method performed by the network device in the second aspect is performed.

According to a ninth aspect, a chip system is provided. The chip system includes a processor, configured to implement the function of the terminal device in the method in the first aspect. In a possible design, the chip system further includes a memory, configured to store program instructions and/or data. The chip system may include a chip, or may include a chip and another discrete component.

According to a tenth aspect, a chip system is provided. The chip system includes a processor, configured to implement the function of the network device in the method in the second aspect. In a possible design, the chip system further includes a memory, configured to store program instructions and/or data. The chip system may include a chip, or may include a chip and another discrete component.

According to an eleventh aspect, a computer-readable storage medium is provided. The computer-readable storage medium stores a computer program, and when the computer program runs, the method performed by the terminal device in the first aspect is implemented.

According to a twelfth aspect, a computer-readable storage medium is provided. The computer-readable storage medium stores a computer program, and when the computer program runs, the method performed by the network device in the second aspect is implemented.

According to a thirteenth aspect, a communication system is provided, including the apparatus according to the third aspect or the fourth aspect, and the apparatus according to the fifth aspect or the sixth aspect.

### BRIEF DESCRIPTION OF DRAWINGS

FIG. 1 is a schematic diagram of a network architecture according to an embodiment of this application;
FIG. 2 is another schematic diagram of a network architecture according to an embodiment of this application;
FIG. 3 is a schematic diagram of adjacent video frames according to an embodiment of this application;
FIG. 4 is a schematic diagram of network coding according to an embodiment of this application;
FIG. 5 is a flowchart of a communication method according to an embodiment of this application;
FIG. 6 is another schematic diagram of adjacent video frames according to an embodiment of this application;
FIG. 7 is a schematic diagram of a late video frame according to an embodiment of this application;
FIG. 8 is a schematic diagram of a base layer and an enhancement layer according to an embodiment of this application;
FIG. 9 is another schematic diagram of network coding according to an embodiment of this application;
FIG. 10 is a schematic diagram of a structure of an apparatus according to an embodiment of this application; and
FIG. 11 is a schematic diagram of another structure of an apparatus according to an embodiment of this application.

### DESCRIPTION OF EMBODIMENTS

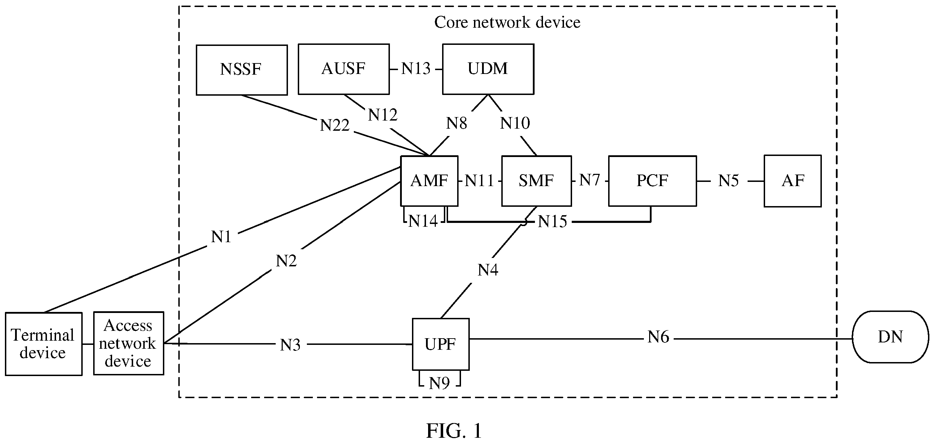

FIG. 1 is a schematic diagram of a network architecture to which an embodiment of this application is applied. The network architecture includes at least one of a terminal device, an access network device, a core network (core network, CN) device, and a data network (data network, DN). The access network device and the core network device may communicate with each other through a next generation (next generation, NG) interface, and different access network devices may communicate with each other through an Xn interface.

### 1. Terminal device

The terminal device may be referred to as a terminal for short, and is a device having a wireless transceiver function. The terminal device may be mobile or fixed. The terminal device may be deployed on land, where the deployment includes indoor or outdoor, or handheld or in-vehicle deployment, may be deployed on water (for example, on a ship), or may be deployed in air (for example, on aircraft, a balloon, or a satellite). The terminal device may be a mobile phone (mobile phone), a pad (pad), a computer with a wireless transceiver function, a virtual reality (virtual reality, VR) terminal device, an augmented reality (augmented reality, AR) terminal device, a wireless terminal device in industrial control (industrial control), a wireless terminal device in self-driving (self-driving), a wireless terminal device in remote medical (remote medical), a wireless terminal device in a smart grid (smart grid), a wireless terminal device in transportation safety (transportation safety), a wireless terminal device in a smart city (smart city), and/or a wireless terminal device in a smart home (smart home). Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device with a wireless communication function, an in-vehicle device, a wearable device, a terminal device in the 5th generation (the 5th generation, 5G) network, a terminal device in an evolved public land mobile network (public land mobile network, PLMN), or the like. The terminal device may also be referred to as user equipment (user equipment, UE). The terminal device may communicate with a plurality of access network devices using different technologies. For example, the terminal device may communicate with an access network device supporting long term evolution (long term evolution, LTE), may communicate with an access network device supporting 5G, or may implement dual connectivity with an access network device supporting LTE and an access network device supporting 5G. This is not limited in embodiments of this application.

### 2. Access network device

The access network device may also be referred to as a radio access network (radio access network, RAN) device, is a device that connects a terminal device to a wireless network, and may provide functions such as radio resource management, quality of service management, and data encryption and compression for the terminal device. The access network device includes but is not limited to:
a next generation NodeB (generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a base band unit (base band unit, BBU), a transmitting and receiving point (transmitting and receiving point, TRP), a transmitting point (transmitting point, TP), a mobile switching center, and/or the like in 5G. Alternatively, the access network device may be a radio controller, a centralized unit (centralized unit, CU), and/or a distributed unit (distributed unit, DU) in a cloud radio access network (cloud radio access network, CRAN) scenario. Alternatively, the access network device may be a relay station, an access point, an in-vehicle device, an access network device in a 5G network, an access network device in an evolved public land mobile network (public land mobile network, PLMN), or the like.

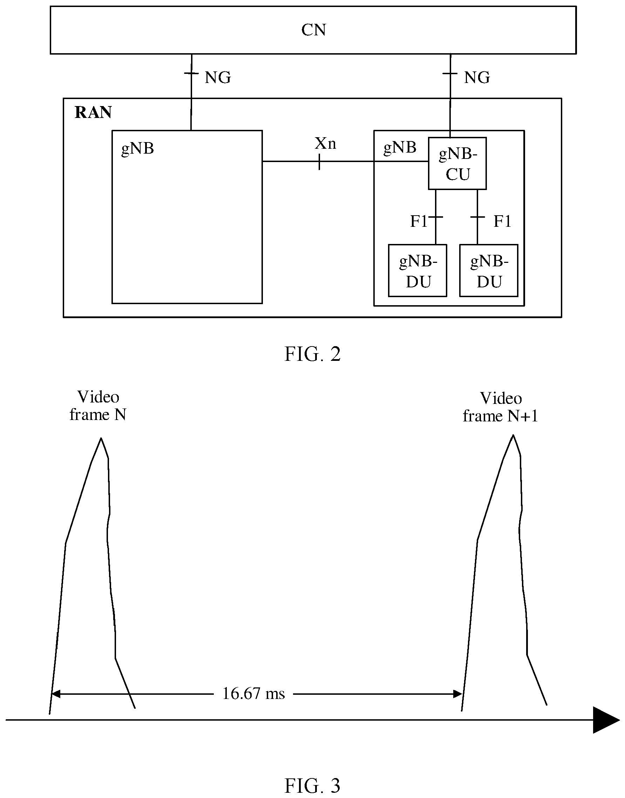

In some embodiments, as shown in FIG. 2, the access network device may include a centralized unit (centralized unit, CU) and a distributed unit (distributed unit, DU), and functions of the access network device may be split. Some functions of the access network device are deployed on the CU, and the remaining functions are deployed on the DU. A plurality of DUs share one CU, thereby reducing costs and facilitating network expansion. Optionally, functions of the CU and the DU may be classified based on protocol stacks. For example, a radio resource control (radio resource control, RRC) layer, a service data adaptation protocol (service data adaptation protocol, SDAP) layer, and a packet data convergence protocol (packet data convergence protocol, PDCP) layer are deployed on the CU. Other layers such as a radio link control (radio link control, RLC) layer, a medium access control (medium access control, MAC) layer, and a physical (physical, PHY) layer are deployed on the DU. The CU and the DU may be connected through an FI interface. The CU, representing the access network device, may be connected to a core network through an NG interface, or the CU, representing the access network device, may be connected to another access network device through an Xn interface. Further, functions of the CU may be classified into:
(1) a centralized unit-control plane (centralized unit-control plane, CU-CP), mainly including control planes of an RRC layer and a PDCP layer on the CU; and
(2) a centralized unit-user plane (centralized unit-user plane, CU-UP), mainly including user planes of an SDAP layer and a PDCP layer on the CU.

### 3. Core network device

The core network device is mainly configured to manage a terminal device and provide a gateway for communication with an external network. The core network device may include one or more of the following network elements: an access and mobility management function (access and mobility management function, AMF) network element, a session management function (session management function, SMF) network element, a user plane function (user plane function, UPF) network element, a policy control function (policy control function, PCF) network element, an application function (application function, AF) network element, a unified data management (unified data management, UDM) network element, an authentication server function (authentication server function, AUSF) network element, and a network slice selection function (network slice selection function, NSSF) network element. The AMF network element is mainly responsible for mobility management in a mobile network, such as user location update, user network registration, and user switching. The SMF network element is mainly responsible for session management in a mobile network, for example, session establishment, modification, and release. A specific function is, for example, allocating an IP address to a user, or selecting a UPF network element that provides a packet forwarding function. The UPF network element is mainly responsible for forwarding and receiving user data. During downlink transmission, the UPF network element may receive user data from a data network (data network, DN), and transmit the user data to a terminal device through an access network device. During uplink transmission, the UPF network element may receive user data from a terminal device through an access network device, and forward the user data to the DN. Optionally, transmission resources and scheduling functions in the UPF network element that provide services for the terminal device may be managed and controlled by an SMF network element. The PCF network element mainly supports providing a unified policy framework to control a network behavior, and providing a policy rule for a control plane network function, and is responsible for obtaining policy-related subscription information of the user. The AF network element mainly supports interaction with a wireless network, for example, a core network of a 3rd generation partnership project (3rd generation partnership project, 3GPP) network, to provide a service, for example, affecting a data routing decision or a policy control function, or providing some third-party services for a network side. The UDM network element is mainly configured to generate an authentication credential, process a subscriber identifier (for example, store and manage a subscription permanent identifier), control access authorization, manage subscription data, and the like. The AUSF network element is mainly configured to perform authentication when the terminal device accesses a network, including receiving an authentication request sent by a security anchor function (security anchor function, SEAF), selecting an authentication method, requesting an authentication vector from an authentication repository and processing function (authentication repository and processing function, ARPF), and the like. The NSSF network element is mainly configured to: select a network slice instance for the terminal device, determine allowed network slice selection assistance information (network slice selection assistance information, NSSAI), configure the NSSAI, and determine an AMF set for serving the terminal device. In different communication systems, network elements or network element names in a core network may be different. In the schematic diagram shown in FIG. 1, the 5^{th} generation mobile communication system is used as an example for description, and this is not intended to limit this application.

### 4. DN

The DN may be a serving network that provides data services for users. For example, the DN may be an IP multi-media service (IP multi-media service) network or the Internet (Internet). The terminal device may establish a protocol data unit (protocol data unit, PDU) session from the terminal device to the DN, to access the DN.

In some embodiments, an extended reality (extended reality, XR) service provides an immersive multimedia experience for a user through interaction between user equipment (for example, a helmet) at an application layer and an XR application server. Optionally, the XR application server may be located on the DN side in the framework shown in FIG. 1, and the helmet may be located on the terminal device side in the architecture shown in FIG. 1. The helmet and the terminal device may be integrated in a physical form, or may be separated. This is not limited.

In an uplink transmission process, a sensor in the helmet may sense a location, an action change, and the like of a user, and generate user information including a field of view, a line of sight, a movement rate, and the like. The helmet may transmit the user information to the XR server through the terminal device, the access network device, the UPF network element, and the like in the architecture shown in FIG. 1.

In a downlink transmission process, the XR server may generate a video frame with reference to the user information reported by the helmet and a scenario in which the user is in a game or a real scene. The XR server may transmit the video frame to the helmet through the UPF network element, the access network device, the terminal device, and the like in the architecture shown in FIG. 1, and finally display the video frame to the user through the helmet. In the downlink transmission process, when the terminal device receives a downlink video frame, how to feed back a receiving status of the video frame to the network device, to optimize transmission of the downlink video frame is a technical problem to be resolved in this embodiment of this application.

This application provides a communication method and an apparatus. The method includes: A terminal device receives at least one video frame from an access network device; the terminal device determines a video frame parameter based on the at least one video frame; and the terminal device sends the video frame parameter to the access network device, so that the access network device can learn of a receiving status of a downlink video frame, to optimize transmission of the downlink video frame.

For ease of understanding, communication nouns or terms used in embodiments of this application are explained and described.
1. XR service model Optionally, an XR service mainly includes:
   uplink service: user information generated by the helmet, including a user location and a line of sight, with a small data volume; and
   downlink service: video frames generated by the XR server based on the user information reported by the helmet, with a large data volume.

As shown in FIG. 3, for the downlink service, the XR server generates video frames at a rate of 60 frames per second, that is, generates an original video frame every 16.67 ms. After the original video frames are encoded and compressed, different types of video frames are formed. For example, typical video frames may include an I frame, a P frame, a B frame, and the like. A size of each video frame may range from 1000 kilobits (kbit) to 10000 kilobits (kbit). Optionally, for a video service, basic processing is to divide a video frame into N pictures per second, and each picture is encoded as a video frame. Because each video frame includes a large quantity of pixels, direct transmission occupies a large bandwidth. Therefore, the video service may be compressed and then transmitted. Due to the nature of the video service, if the camera is not switched, content of most adjacent frames is the same, and only a small amount of content is different. Therefore, video frames may be grouped, and a first frame of each group is a reference frame, and subsequent frames are dependent frames. During compression, intra-frame compression is performed on a reference frame, that is, during compression, only a data rate of the reference frame is referenced, and other frames are not referenced. In this way, after receiving a reference frame, a decompressor can decompress the reference frame independently without other frames. For a dependent frame after the reference frame, inter-frame compression is performed with reference to the reference frame, that is, during compression, both a data rate of the dependent frame and another frame such as the reference frame are referenced. In this way, a compression ratio can be greatly improved during compression, and a size of compressed data can be reduced. The reference frame may also be referred to as an I frame, and has a largest size. The dependent frames include a P frame and a B frame, and have smaller sizes. The P frame refers to a frame that depends on only a previous frame during decoding, and the B frame refers to a frame that depends on both a previous frame and a subsequent frame during decoding.

In some embodiments, due to a network limitation, an encoded data stream is divided into a plurality of data packets according to a standard of 1500 bytes (considering packet header overheads, an actual data payload amount obtained through division may be slightly less than 1500 bytes). From the perspective of a wireless network, downlink video data is represented as a cluster of downlink data packets received by the UPF from the XR server every 16.67 ms. A cluster of downlink data packets may include a plurality of data packets with a size of about 1500 bytes. The cluster of downlink data packets is a downlink video frame.

### 2. Layered video encoding

A size of an original video frame is excessively large. This imposes great pressure on a transmission network. Therefore, the video frame is compressed before transmission. A current compression manner can generally achieve 300:1 compression efficiency, that is, a 300-megabit (Mbit) file can be compressed to about 1 megabit (Mbit). However, as a resolution of a video frame is increasingly high, and chroma division is increasingly fine, a size of the video frame is increasingly large. According to the foregoing 300:1 compression efficiency, a compressed data volume still imposes excessively much pressure on the transmission network. Especially for the wireless network, because a capacity of the wireless network fluctuates greatly, when channel quality is poor, a data volume transmitted on a channel decreases correspondingly, a high-definition video frame cannot be transmitted, and a user may experience mosaics or even frame freezing.

Based on the foregoing case, layered video encoding is introduced, that is, in a compression coding process, information of a video frame is classified into two types: base layer data and enhancement layer data. In some embodiments, a ratio of data volumes of the two types of data may be 1:9. When the channel capacity is small, if the user receives only the base layer data, the user can obtain a low-resolution picture through a display, but no mosaic occurs. If the channel capacity is large, the user can receive the base layer data and the enhancement layer data simultaneously to obtain a high-resolution picture. Compared with a high-definition video that is not layered, a sum of the data volumes of the base layer data and the enhancement layer data is greater than a data volume of the video that is not layered. The layered encoding manner can better cope with the fast change of radio channels, and reduce the frame freezing and mosaic, improving user experience.

In actual layered encoding, the foregoing enhancement layer may include one layer, or may be divided into a plurality of layers. This is not limited. The more the layers, the more suitable the radio channels with different capacities.

### 3. Network coding

Transmission errors may occur due to unstable radio channel statuses. Generally, retransmission is used for compensation. Retransmission can solve the problem of error packets, but causes extra delay and low efficiency. For a real-time multimedia service, a large amount of data needs to be transmitted, and in almost every slot, there are data packets to be transmitted. If an additional retransmitted data packet is inserted, data in each subsequent slot is delayed backward. This increases the delay. In addition, a data packet of a real-time multimedia service is generally large, and only a small part thereof may be incorrect. If the entire data packet is retransmitted because a small part of the data packet is incorrectly transmitted, radio resources are wasted, and efficiency is reduced.

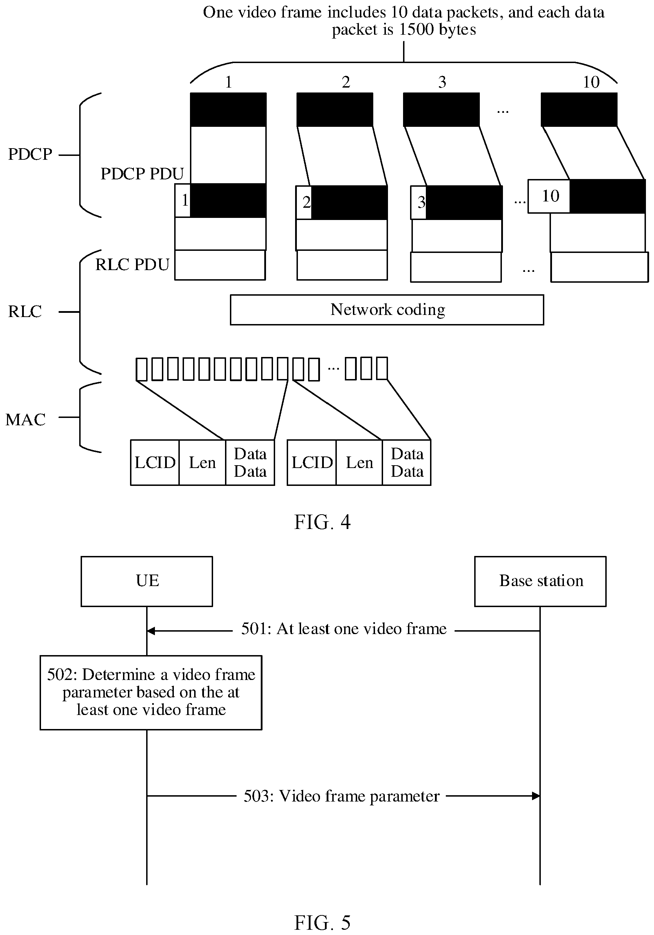

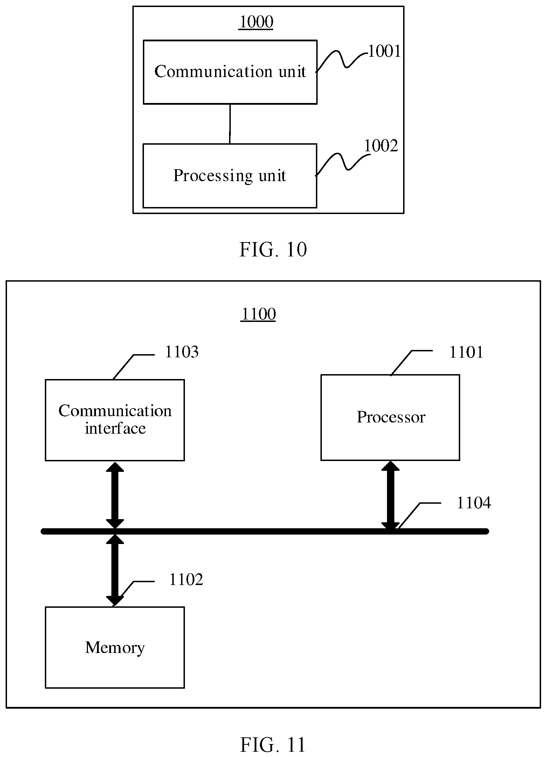

Based on the foregoing case, a network coding mechanism is introduced. The core idea of the network coding mechanism is to encode a group of data packets in a unified manner. In an example, as shown in FIG. 4, 10 data packets included in a video frame may be grouped into a group, and unified network coding is performed. After the encoding, several small data blocks are output, and then the small data blocks are transmitted in batches based on an air interface status. After receiving all the small data blocks, a receiver decodes the entire data packet. If it is found that a data packet cannot be correctly decoded, the sender can be notified to further send some small data blocks. The small data blocks further sent by the sender are not the data blocks that have been transmitted previously, but small data blocks newly generated by a network coding module. The receiver may decode all the received small data blocks in a unified manner.

In some embodiments, as shown in FIG. 4, for each data packet, a PDCP PDU is generated after processing by a PDCP layer, and is transmitted to an RLC layer. After processing by the RLC layer, an RLC PDU is generated. Network coding may be performed on the RLC PDU at the RLC layer to obtain several small data blocks, and the small data blocks are transmitted to the MAC layer. After processing by the MAC layer, a MAC PDU is obtained. Each MAC PDU may include fields such as a logical channel identifier (logical channel identity, LCID), a length (length, Len), and data (data). Optionally, a small data block formed after network coding may also be referred to as a data slice. In the following embodiment, a data slice is used as an example for description.

In the foregoing network coding manner, a real-time feedback mechanism does not need to be designed, and the sender does not need to retransmit the entire original data packet, thereby improving wireless transmission efficiency and reducing a transmission delay.

Unless otherwise specified, "/" in the descriptions of embodiments of this application represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists. A and B may be singular or plural. In addition, in descriptions of this application, unless otherwise specified, "a plurality of" means two or more than two. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The network elements in embodiments of this application include an access network device, a terminal device, a helmet, an XR server, and the like. The access network device may be of a CU/DU architecture. In this case, the access network device includes two network elements: a CU and a DU. Alternatively, the access network device may be of a CP-UP architecture. In this case, the access network device includes three network elements: a CU-CP, a CU-UP, and a DU. Alternatively, the access network device may be of an open radio access network (open radio access network, ORAN) architecture. In this case, the access network device includes four network elements: a CU-CP, a CU-UP, a DU, and a near real-time RAN intelligent controller, RIC (RAN intelligent controller, RIC), or even more network elements. Further, the DU may be split into a DU-H, a DU-L, and the like, to support split of a lower layer, for example, a far-end physical layer. A network device (or a base station) in the following embodiment may be a network element in an access network device, or may include a plurality of network elements in an access network device.

For ease of understanding, an example in which the terminal device is UE and the network device is a base station is used for description. As shown in FIG. 5, a procedure of a communication method is provided, including the following steps.

Step 501: UE receives at least one video frame from a base station. Optionally, as described above, each video frame may include one or more data packets, and a size of each data packet is approximately 1500 bytes. The data packet may also be referred to as an Internet Protocol (Internet Protocol, IP) packet. The following uses the data packet as an example for description. Optionally, a data packet included in each video frame may be video data, may be video data and audio data, or the like. This is not limited.

Step 502: The UE determines a video frame parameter based on the at least one video frame.

Optionally, the UE may determine the video frame parameter by using a video frame as a granularity.

Step 503: The UE sends the video frame parameter to a base station. Optionally, the UE may report the video frame parameter in the following manners:

Periodic reporting: The UE reports the video frame parameter every periodicity, and a reporting periodicity may be configured by a base station, an SMF network element, an XR server, or the like. When the configuration is performed by the base station, the UE receives a configuration information element from the base station, where the configuration information element indicates a reporting periodicity; and the UE reports the video frame parameter according to the reporting periodicity indicated by the configuration information element. When the configuration is performed by the SMF network element or the XR server, the SMF network element or the XR server sends information about the reporting periodicity to the base station. The base station generates, based on the information, a configuration information element indicating the reporting periodicity, and sends the configuration information element to the UE. Alternatively, the base station directly sends the information about the reporting periodicity to the UE as the configuration information element. The UE reports the video frame parameter based on the reporting periodicity indicated by the configuration information element.

Condition-triggered reporting: If the UE finds that a reporting condition is met, the UE reports the video frame parameter once. The reporting condition may be configured by the base station, the SMF network element, the XR service, or the like.

Periodicity + condition-triggered reporting: At the end of each periodicity, the UE takes statistics of video frame parameters, and determines whether a preset condition is met. If the preset condition is met, the video frame parameters are reported; otherwise, the video frame parameters are not reported. Similarly, the reporting periodicity and the reporting condition may be configured by the base station, the SMF network element, the XR server, or the like.

A configuration manner of the reporting condition is the same as that of the reporting periodicity, and details are not described herein again. An object to which the UE reports the video frame parameter is a receiving object of the video frame parameter, and may be a base station, or may be a core network element, for example, an SMF or a UPF, or even may be an XR server. Certainly, if the receiving object of the video frame parameter is a core network element, an XR server, or the like, the base station forwards the received video frame parameter to the core network element, the XR server, or the like. The foregoing description is provided by using an example in which there is one receiving object of the video frame parameter. Actually, there may also be a plurality of receiving objects of the video frame parameter. For example, receiving objects of the video frame parameter may include a base station, a core network element, an XR server, and the like. After receiving the video frame parameter, each receiving object may separately perform corresponding optimization. For example, after receiving the video frame parameter, the base station may optimize radio resource scheduling. After receiving the video frame parameter, the SMF network element may optimize a service configuration of the user. After receiving the video frame parameter, the UPF network element may optimize a forwarding priority of a data packet. After receiving the video frame parameter, the XR server may optimize a coding and/or compression manner of a downlink video frame, and the like.

It can be learned from the foregoing description that, in this embodiment of this application, the UE obtains the video frame parameter based on the received video frame, to report the receiving status of the video frame, so that the network device can intuitively and accurately obtain the receiving status of the video frame, to optimize a transmission solution of the video frame.

In a solution, for a video service, the UE reports a receiving status, for example, packet loss and/or a data packet delay, of each data packet by using a data packet as a granularity. This reporting manner is not accurate enough for video service statistics. The reasons are as follows: For example, if the UE loses two data packets, there may be two cases.

Case 1: Two lost data packets are located in different video frames.

Case 2: Two lost data packets are located in a same video frame.

From the perspective of network performance, the foregoing two cases correspond to the same network performance, and quantities of lost data packets are the same. However, from the perspective of user experience, the foregoing two cases correspond to different user experience. For Case 1, the user can continuously view two pictures with poor picture quality. For Case 2, the user views a picture with poor picture quality, and the next picture is very clear. The UE reports the receiving status of the data packet by using a data packet as a granularity, and it is difficult to reflect the difference between the foregoing two cases. However, in an embodiment of this application, the UE reports the receiving status of the video frame by using a video frame as a granularity, so that the receiving status of the video frame can be more accurately reflected, to optimize the entire video transmission solution.

Embodiment 1: In this embodiment of this application, the video frame parameter reported by the UE may include at least one of the following:
1. Spread delay (spread delay) parameter: The spread delay parameter may indicate at least one of the following: a spread delay of a first video frame, an average spread delay of a plurality of video frames, a maximum spread delay of a plurality of video frames, a minimum spread delay of a plurality of video frames, and a variance of spread delays of a plurality of video frames. The first video frame or the plurality of video frames are one or more video frames of the at least one video frame received by the UE.

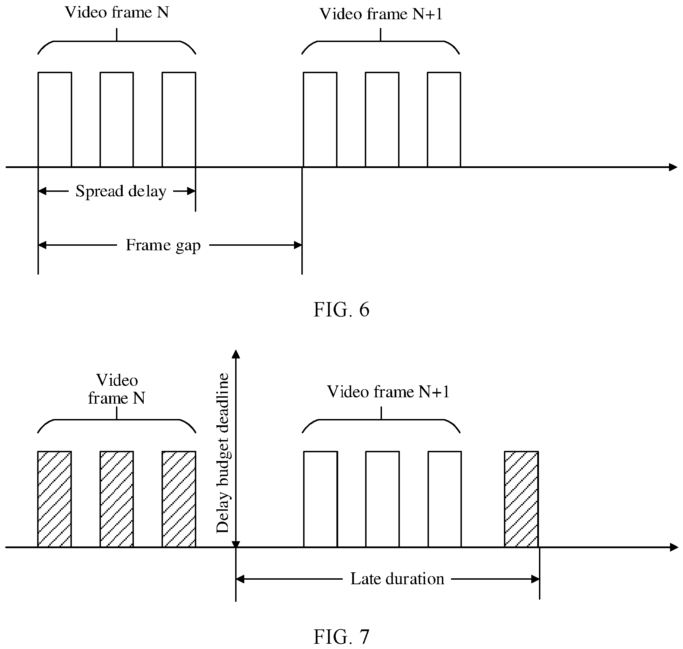

One picture may be encoded, compressed, or the like to form one or more video frames, and each video frame may be divided into a plurality of data packets. In this case, from the perspective of the UE, receiving one video frame is receiving a plurality of data packets. The spread delay may be a time length from a time when the UE successfully receives a first data packet of a video frame to a time when the UE successfully receives a last data packet of the video frame. For example, as shown in FIG. 6, a video frame N is divided into three data packets, and a spread delay of the video frame N may be specifically a time length from a time when the UE successfully receives the first data packet of the video frame N to a time when the UE successfully receives the third data packet of the video frame N.

In this embodiment of this application, the UE may take statistics of a spread delay of each video frame, obtain and report an average value, a maximum value, a minimum value, a variance, or the like of the spread delays of the plurality of video frames based on the spread delays of the plurality of video frames. Alternatively, in this embodiment of this application, the UE may report a spread delay of a single video frame, that is, a spread delay of the first video frame. This is not limited.

For example, a manner in which the UE reports the spread delay parameter may include any one of the following:
Periodic reporting: A reporting periodicity is configured by the base station, the SMF network element, or the XR service, and reporting is performed every periodicity.

Condition-triggered reporting: A reporting condition is configured by the base station, the SMF network element, or the XR server. If the UE finds that the reporting condition is met, reporting is performed once.

Periodicity + condition-triggered reporting: At the end of each periodicity, the UE takes statistics of a spread delay of each video frame in the periodicity and determines whether the preset reporting condition is met. If the reporting condition is met, the UE performs reporting; otherwise, the UE does not perform reporting. Similarly, the periodicity and the reporting condition may be configured by the base station, the SMF network element, the XR server, or the like.

The foregoing reporting condition may be set according to a requirement. This is not limited. The reporting condition may correspond to reported content. For example, the reporting condition may include that: when a spread delay of a single video frame is greater than or equal to a threshold A1, a spread delay parameter of the single video frame is reported; or the reporting condition may include that: when a spread delay of a single video frame is less than or equal to a threshold B1, a spread delay parameter of the single video frame is reported. For another example, the reporting condition may include that: when an average spread delay (that is, an average value of spread delays of a plurality of video frames) of the plurality of video frames is greater than or equal to a threshold A2, the average spread delay of the plurality of video frames is reported; or the reporting condition may include that: when an average spread delay of a plurality of video frames is less than or equal to a threshold B2, the average spread delay of the plurality of video frames is reported. This is the same for reporting of a maximum value, a minimum value, or a variance of spread delays of a plurality of video frames. Alternatively, the reporting condition may not correspond to reported content. For example, the reporting condition may include that: when a spread delay of a single video frame is greater than or equal to a threshold A3, an average spread delay of a plurality of video frames including the single video frame is reported; or the reporting condition may include that: when a spread delay of a single video frame is greater than or equal to a threshold B3, an average spread delay of a plurality of video frames including the single video frame is reported. The single video frame may be a first video frame, an intermediate video frame, or a last video frame of the plurality of video frames, and a quantity of the plurality of video frames may be preset. This is the same for reporting of a maximum value, a minimum value, or a variance of spread delays of a plurality of video frames. Values of the thresholds A1 to A3 and B1 to B3 are not limited, and may be the same, or may be different.

After learning of the spread delay parameter, the network device may adjust a scheduling policy according to a value of the spread delay. For example, if the spread delay is excessively large, more resources are scheduled for the UE, or a modulation and coding scheme (modulation and coding scheme, MCS) is adjusted, to improve user experience. If the spread delay is excessively small, scheduling resources may be reduced, or the MCS may be adjusted, to save resources.

2. Frame gap parameter: The frame gap parameter indicates at least one of the following: a frame gap between adj acent video frames, an average value of a plurality of frame gaps, a maximum value of a plurality of frame gaps, a minimum value of a plurality of frame gaps, and a variance of a plurality of frame gaps. The UE receives a plurality of video frames from the base station.

Optionally, the frame gap may also be referred to as a video frame gap. Time differences between all adjacent video frames sent by a video encoder in an XR application server are the same. A specific value depends on a frame rate. For example, in the case of 60 frames per second, a time difference between two adjacent video frames is 16.67 ms. However, a time for a network to transmit each video frame is not completely the same, especially for a wireless network. Therefore, when receiving video frames, the UE does not receive a video frame every 16.67 ms. The UE may determine a frame gap between two adjacent video frames according to reference locations of the two adjacent video frames, where the reference location may be a start location, a middle location, an end location, any other locations, or the like. This is not limited. For example, the UE may take statistics of successful receiving moments of first data packets corresponding to two adjacent video frames, and calculate a time difference between the two receiving moments as a frame gap between the adjacent video frames. For example, as shown in FIG. 6, a video frame N and a video frame N+1 are adjacent video frames, and each include three data packets. The UE may separately take statistics of a moment at which a first data packet in the video frame N is successfully received and a moment at which a first data packet in the video frame N+1 is successfully received. A time difference between the two moments is a frame gap between the video frame N and the video frame N+1. Alternatively, the UE may take statistics of successful receiving moments of last data packets corresponding to two adjacent video frames, and calculate a time difference between the two receiving moments as a frame gap between the adjacent video frames.

3. Packet loss parameter: The packet loss parameter includes at least one of the following: a quantity of video frames in which packet loss occurs, and a proportion of video frames in which packet loss occurs, where packet loss occurs in K consecutive video frames, and K is a positive integer greater than or equal to 1.

If the UE finds that packet loss occurs after receiving a plurality of data packets of a video frame, the video frame is considered as a "video frame in which packet loss occurs". Specifically, the UE may determine, through a PDCP sequence number (sequence number, SN), whether packet loss occurs, and if PDCP SNs corresponding to the received data packets are non-consecutive, it is considered that packet loss occurs. For example, a video frame includes M data packets, and PDCP SNs of the M data packets are sequentially 1 to M. When the UE receives the M^{th} data packet, if the UE finds that a previous data packet whose PDCP SN is N is not received, it may be considered that PDCP SNs of the video frame are non-consecutive, and it may be determined that packet loss occurs in the video frame. Optionally, whether the foregoing PDCP SNs are consecutive may be alternatively replaced with whether the PDCP SNs are lost, or the like. Specifically, the UE may determine, at a moment at which an end marker of a video frame is received, whether packet loss occurs in the video frame; or may determine, at a moment at which data packets corresponding to the video frame are submitted to an IP layer or a real-time transport protocol (real-time transport protocol, RTP) layer, whether packet loss occurs in the video frame; or may determine, at a moment at which the data packets corresponding to the video frame are played at an application layer, whether packet loss occurs in the video frame. This is not limited.

In some embodiments, within a period of time, the UE may determine a quantity of video frames in which packet loss occurs, a proportion of the video frames in which packet loss occurs to total video frames within the period of time, and the like. For example, within a period of time, the UE receives a total of five video frames from the base station. If packet loss occurs in three video frames, a quantity of video frames in which packet loss occurs is 3, and a proportion of the video frames in which packet loss occurs is 3/5=60%. The UE may further take statistics, in video frames in which packet loss occurs, of a ratio of video frames with one data packet lost to all the video frames in which packet loss occurs, a ratio of video frames with two data packets lost to all the video frames in which packet loss occurs, a ratio of video frames with three data packets lost to all the video frames in which packet loss occurs, and the like. Still using the foregoing example, within a period of time, packet loss occurs in three video frames, where one data packet is lost in one video frame, and two data packets are lost in two video frames. In this case, a proportion of the video frame with one data packet lost to all the video frames in which packet loss occurs is 1/3=33.3%, and a proportion of the video frames with two data packets lost to all the video frames in which packet loss occurs is 2/3=66.7%. The UE may further take statistics of how many consecutive video frames in which packet loss occurs there are. For example, within a period of time, the UE receives 10 video frames from the base station, whose sequence numbers are sequentially 1 to 10. If packet loss occurs in video frame 1, no packet loss occurs in video frames 2 to 5, packet loss occurs in video frames 6 to 8, and no packet loss occurs in video frames 9 and 10, the UE may report that packet loss occurs in three consecutive video frames, that is, video frames 6 to 8.

4. Late parameter: The late parameter indicates at least one of the following: a quantity of late video frames, a proportion of late video frames, a time difference between an actual receiving moment and a correct receiving moment of a late video frame, an average value of time differences between actual receiving moments and correct receiving moments of a plurality of late video frames, a maximum value of time differences between actual receiving moments and correct receiving moments of a plurality of late video frames, a minimum value of time differences between actual receiving moments and correct receiving moments of a plurality of late video frames, a variance of time differences between actual receiving moments and correct receiving moments of a plurality of late video frames, and the like.

Because correlation between consecutive video frames is high, in a process of compressing a video frame, an encoder in the XR application server selects a video frame before the video frame as a reference frame for compression. As shown in FIG. 7, if some data packets in a video frame are not successfully transmitted within a predefined delay, the data packets are successfully transmitted after a delay budget. Although the video frame cannot be displayed through the display, the video frame may be used as a reference frame of a subsequent video frame, and is still useful. The UE may take statistics of information such as a quantity of such video frames, a proportion of such video frames in all video frames, and how long a correct receiving moment is later than the delay budget, and report the information to the base station. In this embodiment of this application, parameters specifically reported by the UE may be: a quantity of late video frames within a period of time, a proportion of the late video frames, a time difference between an actual receiving moment and a correct receiving moment of a late video frame, a maximum value, a minimum value, a variance, or the like of time differences between actual receiving moments and correct receiving moments of a plurality of late video frames, and the like. This is not limited. For example, within a period of time, the UE receives 10 video frames from the base station, video frames 1 to 5 correctly arrive, and video frames 6 to 10 are late. In this case, a quantity of late video frames is 5, and a proportion of the late video frames is 5/10=50%. An actual arrival moment of video frame 6 is 15:05:35 on August 28, 2020, and a correct arrival moment of video frame 6 is to be 15:05:20 on August 28, 2020. In this case, a time difference between the actual arrival moment and the correct arrival moment of data packet 6 is 15 seconds. In a possible implementation, "an actual receiving moment and a correct receiving moment of a video frame" may be defined in the following manner: The actual receiving moment of the video frame may refer to a moment at which the UE receives all data packets corresponding to the video frame. It is set that an N^{th} video frame includes 10 data packets, and an actual receiving moment of the N^{th} video frame may be a moment at which the UE receives all the 10 data packets of the N^{th} video frame. First, a correctly received video frame is defined. If all data packets of a video frame are received before a predefined moment, the video frame may be considered as a correctly received video frame. If an i^{th} video frame is set to be correctly received, a correct receiving moment of an (i+M)^{th} video frame is: an actual receiving moment of a last data packet of the i^{th} video frame + M*a time difference between adjacent video frames. Optionally, the time difference between adjacent video frames may be 16.67 ms, and M is a positive integer greater than or equal to 1.

In the foregoing description, an example in which a late video frame is defined as a video frame "that is received after the delay budget, but can still be used as a reference frame of another video frame following the late video frame" is used for description. This is not intended to limit embodiments of this application. For example, in this embodiment of this application, the late video frame may be alternatively defined as "a video frame received after a first delay budget", or "a video frame received after the first delay budget and before a second delay budget", or "a video frame whose late duration meets a preset time requirement".

### 5. Base layer and enhancement layer parameters

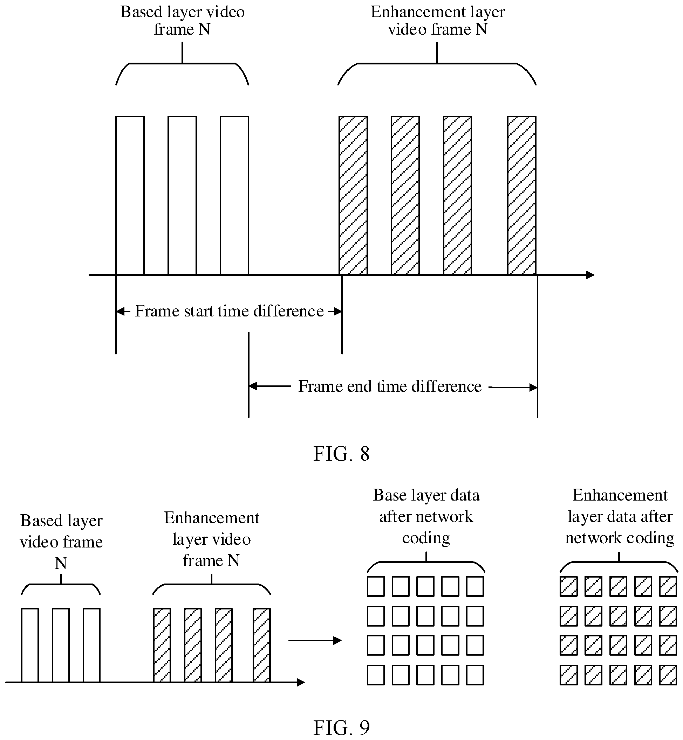

If layered video encoding is used, for example, a video is divided into a base layer and an enhancement layer, the UE may receive data of two flows flow, two data radio bearers (data radio bearer, DRB), or two data channels, base layer data and enhancement layer data. The UE may separately take statistics of data reception statuses of the two layers, and report one or more of the following parameters.
1. Time difference between a time when the UE receives base layer data and a time when the UE receives enhancement layer data in a same video frame. Optionally, the UE may take statistics of a time difference between a reference location in the base layer data and a reference location in the enhancement layer data in the same video frame. The reference location may be a start frame location, an end frame location, a middle location, any location, or the like. This is not limited. As shown in FIG. 8, for a video frame N, a base layer includes three data packets, and an enhancement layer includes four data packets. A frame start time difference between the base layer and the enhancement layer of the video frame N may be counted, or a frame end time difference between the base layer and the enhancement layer of the video frame N may be counted, and the like. It may be understood that, the UE may report a time difference between base layer data and enhancement layer data in a single video frame, or the UE may report an average value, a maximum value, a minimum value, a variance, or the like of time differences between base layer data and enhancement layer data in a plurality of video frames.

In the foregoing description, an example in which the video frame is divided into two layers is used for description. In practice, the video frame may be further divided into three layers, four layers, or more layers. For example, in the case of three layers, the entire video frame is divided into a base layer, a first enhancement layer, and a second enhancement layer. For the case of four layers, the entire video frame is divided into a base layer, a first enhancement layer, a second enhancement layer, and a third enhancement layer. For example, the foregoing video frame is divided into three layers. The UE may separately report a time difference between first enhancement layer data and base layer data, a time difference between second enhancement layer data and the base layer data, and the like, and may even report a time difference between different enhancement layers. This is not limited.

2. A plurality of parameters selected from a quantity, a proportion, a quantity of lost packets, or the like of video frames in which packet loss does not occur at a base layer but occurs at an enhancement layer in a same video frame, or a quantity, a proportion, a quantity of lost packets, or the like of video frames in which packet loss occurs at an enhancement layer. Because the network adopts a more robust transmission policy for base layer data, a probability of packet loss of enhancement layer data packet is higher. The UE may take statistics of one or more of information such as a quantity, a proportion, a quantity of lost packets, or the like of video frames in which packet loss does not occur at a base layer but occurs at an enhancement layer, and report the information to the base station. The base station may adjust the transmission policy of the enhancement layer according to the information.

The foregoing is described by using an example in which the video frame is divided into two layers: a base layer and an enhancement layer. In practice, the video frame may be divided into three layers, four layers, or more layers. For example, the video frame is divided into three layers. The UE may take statistics of a quantity, a proportion, a quantity of lost packets, or the like of video frames in which packet loss does not occur at a base layer but occurs at a first enhancement layer, and a quantity, a proportion, a quantity of lost packets, or the like of video frames in which packet loss does not occur at the base layer but occurs at a second enhancement layer. The UE may even report a quantity, a proportion, a quantity of lost packets, or the like of video frames in which packet loss does not occur at the base layer or the first enhancement layer but occurs at the second enhancement layer, or the UE may report a quantity, a proportion, a quantity of lost packets, or the like of video frames in which packet loss does not occur at the base layer or the second enhancement layer but occurs at the first enhancement layer, or the UE may report a quantity, a proportion, a quantity of lost packets, or the like of video frames in which packet loss does not occur at the base layer but occurs at the first enhancement layer and the second enhancement layer simultaneously.

3. A plurality of parameters selected from a quantity, a proportion, a quantity of lost packets, or the like of video frames in which packet loss does not occur at an enhancement layer but occurs at a base layer in a same video frame, or a quantity, a proportion, a quantity of lost packets, or the like of video frames in which packet loss occurs at a base layer. The network adopts a more robust transmission policy for base layer data. Although the probability of this case is low, it does not mean that there is no such case. The UE may report this case to the base station, and the base station may analyze a cause of packet loss at the base layer according to the case, to optimize network deployment.

Similarly, the foregoing is described by using an example in which the video frame is divided into two layers: a base layer and an enhancement layer. In practice, the video frame may be divided into three layers, four layers, or even more layers. Using an example in which a video frame is divided into three layers, the UE may take statistics of a quantity, a proportion, a quantity of lost packets, or the like of video frames in which packet loss does not occur at a first enhancement layer but occurs at a base layer. Alternatively, the UE may take statistics of a quantity, a proportion, a quantity of lost packets, or the like of video frames in which packet loss does not occur at a second enhancement layer but occurs at the base layer. Alternatively, the UE may take statistics of a quantity, a proportion, a quantity of lost packets, or the like of video frames in which packet loss does not occur at the first enhancement layer or the second enhancement layer but occurs at the base layer.

Optionally, a specific manner in which the UE reports the frame gap parameter, the packet loss parameter, the late parameter, or the base layer and enhancement layer parameters is similar to the foregoing manner in which the UE reports the spread delay parameter, and is not described in detail again.

It can be learned from the foregoing that the UE reports various video frame parameters by using a video frame as a granularity, so that the network more intuitively learns of the transmission status of the video frame, and optimizes a network algorithm.

The foregoing uses the spread delay as an example to describe the reporting condition. For a reporting condition of another parameter, refer to that of the spread delay.

Embodiment 2: Due to particularity of a video service, a network coding manner may be used. Specifically, the base station may perform network coding on data of the video service, and then transmit the data to the UE. The base station may generally perform unified network coding on a plurality of data packets included in a video frame. In this case, a video frame parameter reported by the UE may include at least one of the following:
1. Spread delay parameter
   A difference from the spread delay parameter in Embodiment 1 lies in that network coding is not performed on the video frame in Embodiment 1, and network coding is performed on the video frame in this embodiment of this application. In some embodiments, after receiving the spread delay parameter, if the base station finds that the spread delay is excessively large and exceeds decoding duration of a general video decoder, the base station may subsequently select a proper time to send a first data packet of a subsequent video frame, to ensure that a last data packet of the video frame is sent within a proper spread delay.
2. Frame gap parameter
   A difference from the frame gap parameter in Embodiment 1 lies in that network coding is not performed on the video frame in Embodiment 1, and network coding is performed on the video frame in this embodiment of this application. In some embodiments, if the base station finds that the frame gap between the video frames is unstable, the base station may subsequently increase a size of a buffer buffer to ensure that the video frames are sent at a same interval.
3. Packet loss parameter
   A difference from the packet loss parameter in Embodiment 1 lies in that network coding is not performed on the video frame in Embodiment 1, and network coding is performed on the video frame in this embodiment of this application. In some embodiments, if the base station finds that there are a small quantity of video frames in which packet loss occurs, but once packet loss occurs, a plurality of packets are lost, the base station determines that a deep fading time of a wireless signal is long, and may change a new frequency band to send a video frame.
4. Base layer and enhancement layer parameters
   A difference from the base layer and enhancement layer parameters in Embodiment 1 lies in that network coding is not performed on the video frame in Embodiment 1, and network coding is performed on the video frame in this embodiment of this application. In some embodiments, if the base station finds that a time difference between a base layer and an enhancement layer of a same video frame is excessively large, a transmission interval between the two layers may be reduced subsequently.
5. Data slice parameter: A video frame includes one or more data slices after network coding is performed, and the data slice parameter includes a parameter used for at least one of the following items.

A quantity and/or a data volume of data slices that the UE needs to receive to successfully decode a video frame.

After network coding is performed on the video frame, original data is redundant, and the data volume increases. The more redundancy, the higher the tolerance of a packet loss rate in network transmission, and the higher the requirement for the network transmission capacity. For example, a data packet of a video frame has a data volume of 1000 kilobits (Kbit) before network coding, and a data volume of 1500 kilobits (Kbit) after network coding. However, the UE receives 1200 kilobits (Kbit), and even if packet loss occurs in the middle, the UE can still perform network decoding and successfully recover all data of the video frame. In this case, the UE may report a parameter indicating a data volume of data slices that the UE needs to receive to successfully decode a video frame, for example, "1200 kilobits are required to successfully perform network decoding". Similarly, the UE may report a quantity of data slices that the UE needs to receive to successfully decode a video frame, for example, a parameter of "N data slices are required to successfully perform network decoding". After obtaining the report information, the base station may lower a redundancy rate of network coding for subsequent video frames. In addition, to help the base station control the redundancy rate of network coding, the UE may further take statistics of and report "a data volume that needs to be received by the UE to successfully decode a video frame". It may be understood that the UE may report a quantity or a data volume of data slices required for successfully decoding a single video frame, or may report an average value, a maximum value, a minimum value, a variance, or the like of a quantity or a data volume of data slices required for successfully decoding a plurality of video frames by the UE.

A quantity and/or a data volume of data slices that the UE needs to receive to successfully decode a base layer of a video frame.

A quantity and/or a data volume of data slices that the UE needs to receive to successfully decode an enhancement layer of a video frame.

As shown in FIG. 9, in the case of layered video encoding + network coding, the base station may perform network coding for the base layer and the enhancement layer respectively. After receiving the base layer data, the UE may take statistics of a quantity or a data volume of data slices required for successfully decoding the base layer data, and report the quantity or the data volume. After receiving the enhancement layer data, the UE may take statistics of a quantity or a data volume of data slices required for successfully decoding the enhancement layer data, or the like. Certainly, the quantity or the data volume of the data slices may be a quantity or a data volume of data slices required by a base layer or an enhancement layer of a single video frame, or may be an average value, a maximum value, a minimum value, a variance, or the like of a quantity or a data volume of data slices required by base layers or enhancement layers of a plurality of video frames. This is not limited. Optionally, the base station may adjust the redundancy rate of the base layer or the enhancement layer in the network coding process according to the reporting status of the UE.

The method provided in embodiments of this application is described above in detail with reference to FIG. 1 to FIG. 9. An apparatus provided in embodiments of this application is described below in detail with reference to FIG. 10 and FIG. 11. It should be understood that the description of the apparatus embodiments corresponds to the description of the method embodiments. For content not described in detail in the apparatus embodiments, refer to the description in the foregoing method embodiments.

FIG. 10 is a schematic block diagram of an apparatus 1000 according to an embodiment of this application. The apparatus is configured to implement functions of the terminal device or the network device in the foregoing methods. For example, the apparatus 1000 may be a software unit or a chip system. The chip system may include a chip, or may include a chip and another discrete component. The apparatus includes a communication unit 1001, and may further include a processing unit 1002. The communication unit 1001 may communicate with the outside. The processing unit 1002 is configured to perform processing. The communication unit 1001 may also be referred to as a communication interface, a transceiver unit, an input/output interface, or the like.

In an example, the apparatus 1000 can implement the steps performed by the terminal device in the foregoing embodiment. The apparatus 1000 may be a terminal device, or a chip or a circuit configured in the terminal device. The communication unit 1001 performs sending and receiving operations in the foregoing embodiments, and the processing unit 1002 is configured to perform processing-related operations of the terminal device in the foregoing method embodiments.

For example, the communication unit 1001 is configured to receive at least one video frame from a network device; and the processing unit 1002 is configured to determine a video frame parameter based on the at least one video frame. The communication unit 1001 is further configured to send the video frame parameter to the network device.

Optionally, the video frame parameter includes at least one of the following: a spread delay parameter, a frame gap parameter, a packet loss parameter, a late parameter, and base layer and enhancement layer parameters.

Optionally, the spread delay parameter indicates at least one of the following: a spread delay of a first video frame, an average spread delay of a plurality of video frames, a maximum spread delay of a plurality of video frames, a minimum spread delay of a plurality of video frames, and a variance of spread delays of a plurality of video frames, where the spread delay is a time length from a time when the terminal device successfully receives a first data packet of a video frame to a time when the terminal device successfully receives a last data packet of the video frame, and the first video frame or the plurality of video frames are one or more video frames of the at least one video frame received by the terminal device.

Optionally, the frame gap parameter indicates at least one of the following: a frame gap between adjacent video frames, an average value of a plurality of frame gaps, a maximum value of a plurality of frame gaps, a minimum value of a plurality of frame gaps, and a variance of a plurality of frame gaps, where the terminal device receives a plurality of video frames from the network device.

Optionally, the packet loss parameter includes at least one of the following: a quantity of video frames in which packet loss occurs, and a proportion of video frames in which packet loss occurs, where packet loss occurs in K consecutive video frames, and K is a positive integer greater than or equal to 1.

Optionally, the processing unit 1002 is further configured to determine whether packet data convergence protocol PDCP sequence numbers SNs of data packets included in a received video frame are consecutive; and determine that packet loss occurs in the video frame when PDCP SNs of the data packets included in the video frame received by the terminal device are non-consecutive.

Optionally, the late parameter indicates at least one of the following: a quantity of late video frames, a proportion of late video frames, a time difference between an actual receiving moment and a correct receiving moment of a late video frame, an average value of time differences between actual receiving moments and correct receiving moments of a plurality of late video frames, a maximum value of time differences between actual receiving moments and correct receiving moments of a plurality of late video frames, a minimum value of time differences between actual receiving moments and correct receiving moments of a plurality of late video frames, and a variance of time differences between actual receiving moments and correct receiving moments of a plurality of late video frames.

Optionally, each video frame includes base layer data and enhancement layer data; and the base layer and enhancement layer parameters include at least one of the following: a time difference between a time when the terminal device receives base layer data and a time when the terminal device receives enhancement layer data in a second video frame, where the second video frame is a video frame in the at least one video frame; at least one of a quantity of third video frames, a proportion of third video frames, or a quantity of lost packets at an enhancement layer in a third video frame, where the third video frame is a video frame in which packet loss does not occur in base layer data but occurs in enhancement layer data, and the third video frame is a video frame in the at least one video frame; and at least one of a quantity of fourth video frames, a proportion of fourth video frames, or a quantity of lost packets at a base layer in a fourth video frame, where the fourth video frame is a video frame in which packet loss does not occur in enhancement layer data but occurs in base layer data, and the fourth video frame is a video frame in the at least one video frame.

Optionally, the video frame includes one or more data slices after network coding is performed, and the video frame parameter further includes at least one of the following: a quantity of data slices that the terminal device needs to receive to successfully decode a video frame and/or a data volume of the data slices; a quantity of data slices that the terminal device needs to receive to successfully decode a base layer of a video frame and/or a data volume of the data slices; and a quantity of data slices that the terminal device needs to receive to successfully decode an enhancement layer of a video frame and/or a data volume of the data slices.

In an example, the apparatus 1000 can implement the steps performed by the network device in the foregoing method embodiments. The apparatus 1000 may be a network device, or a chip or a circuit configured in the network device. The communication unit 1001 is configured to perform sending and receiving operations of the network device in the foregoing method embodiments, and the processing unit 1002 is configured to perform processing-related operations of the network device in the foregoing method embodiments.

For example, the communication unit 1001 is configured to send at least one video frame to a terminal device, where the communication unit 1001 is further configured to receive a video frame parameter from the terminal device, and the video frame parameter is determined based on the at least one video frame. Optionally, the processing unit 1002 may be configured to optimize transmission of a downlink video frame according to the video frame parameter.

Optionally, the video frame parameter includes at least one of the following: a spread delay parameter, a frame gap parameter, a packet loss parameter, a late parameter, and base layer and enhancement layer parameters.

Optionally, the spread delay parameter indicates at least one of the following: a spread delay of a first video frame, spread delays of a plurality of video frames, a maximum spread delay of a plurality of video frames, a minimum spread delay of a plurality of video frames, and a variance of spread delays of a plurality of video frames, where the spread delay is a time length from a time when the terminal device successfully receives a first data packet of a video frame to a time when the terminal device successfully receives a last data packet of the video frame, and the first video frame or the plurality of video frames are one or more video frames of the at least one video frame received by the terminal device.

Optionally, the frame gap parameter indicates at least one of the following: a frame gap between adjacent video frames, an average value of a plurality of frame gaps, a maximum value of a plurality of frame gaps, a minimum value of a plurality of frame gaps, and a variance of a plurality of frame gaps, where the terminal device receives a plurality of video frames from the network device.

Optionally, the packet loss parameter includes at least one of the following: a quantity of video frames in which packet loss occurs, and a proportion of video frames in which packet loss occurs, where packet loss occurs in K consecutive video frames, and K is a positive integer greater than or equal to 1.

Optionally, the late parameter indicates at least one of the following: a quantity of late video frames, a proportion of late video frames, a time difference between an actual receiving moment and a correct receiving moment of a late video frame, an average value of time differences between actual receiving moments and correct receiving moments of a plurality of late video frames, a maximum value of time differences between actual receiving moments and correct receiving moments of a plurality of late video frames, a minimum value of time differences between actual receiving moments and correct receiving moments of a plurality of late video frames, and a variance of time differences between actual receiving moments and correct receiving moments of a plurality of late video frames.

Optionally, each video frame includes base layer data and enhancement layer data; and the base layer and enhancement layer parameters include at least one of the following: a time difference between a time when the terminal device receives base layer data and a time when the terminal device receives enhancement layer data in a second video frame, where the second video frame is a video frame in the at least one video frame; at least one of a quantity of third video frames, a proportion of third video frames, or a quantity of lost packets at an enhancement layer in a third video frame, where the third video frame is a video frame in which packet loss does not occur in base layer data but occurs in enhancement layer data, and the third video frame is a video frame in the at least one video frame; and at least one of a quantity of fourth video frames, a proportion of fourth video frames, or a quantity of lost packets at a base layer in a fourth video frame, where the fourth video frame is a video frame in which packet loss does not occur in enhancement layer data but occurs in base layer data, and the fourth video frame is a video frame in the at least one video frame.

Optionally, the video frame includes one or more data slices after network coding is performed, and the video frame parameter further includes at least one of the following: a quantity of data slices that the terminal device needs to receive to successfully decode a video frame and/or a data volume of the data slices; a quantity of data slices that the terminal device needs to receive to successfully decode a base layer of a video frame and/or a data volume of the data slices; and a quantity of data slices that the terminal device needs to receive to successfully decode an enhancement layer of a video frame and/or a data volume of the data slices.

In embodiments of this application, division into the units is an example, is merely division into logical functions, and may be other division during actual implementation. In addition, functional units in embodiments of this application may be integrated into one processor, or each of the units may exist alone physically, or two or more units may be integrated into one unit. The integrated unit may be implemented in a form of hardware, or may be implemented in a form of a software functional unit.

It can be understood that in the foregoing embodiment, functions of the communication unit can be implemented by a transceiver, and functions of the processing unit can be implemented by a processor. The transceiver may include a transmitter and/or a receiver, to respectively implement functions of a sending unit and/or a receiving unit. Descriptions are provided below by way of example with reference to FIG. 11.

FIG. 11 is a schematic block diagram of an apparatus 1100 according to an embodiment of this application. The apparatus 1100 shown in FIG. 11 may be an implementation of a hardware circuit of the apparatus shown in FIG. 10. The apparatus may perform functions of the terminal device or the network device in the foregoing method embodiments. For ease of description, FIG. 11 only shows main components of the communication apparatus.

The communication apparatus 1100 shown in FIG. 11 includes at least one processor 1101. The communication apparatus 1100 may further include at least one memory 1102, configured to store program instructions and/or data. The memory 1102 is coupled to the processor 1101. The coupling in this embodiment of this application may be indirect coupling or a communication connection between apparatuses, units, or modules in an electrical form, a mechanical form, or another form, and is used for information exchange between the apparatuses, the units, or the modules. The processor 1101 may cooperate with the memory 1102, the processor 1101 may execute program instructions stored in the memory 1102, and at least one of the at least one memory 1102 may be included in the processor 1101.

The apparatus 1100 may further include a communication interface 1103, configured to communicate with another device through a transmission medium, so that the communication apparatus 1100 can communicate with the another device. In this embodiment of this application, the communication interface may be a transceiver, a circuit, a bus, a module, or a communication interface of another type. In this embodiment of this application, when the communication interface is the transceiver, the transceiver may include an independent receiver and an independent transmitter, or may be a transceiver integrated with a transceiver function, or may be an interface circuit.

It should be understood that connection media between the processor 1101, the memory 1102, and the communication interface 1103 are not limited in this embodiment of this application. In this embodiment of this application, in FIG. 11, the memory 1102, the processor 1101, and the communication interface 1103 are connected with each other through a communication bus 1104. The bus is represented by a thick line in FIG. 11, and connection manners of other components are merely for schematic descriptions and are not construed as a limitation. The bus may include an address bus, a data bus, a control bus, and the like. For ease of representation, only one thick line is used to represent the bus in FIG. 11, but this does not mean that there is only one bus or only one type of bus.

In an example, the apparatus 1100 is configured to implement the steps performed by the terminal device in the foregoing method embodiment. The communication interface 1103 is configured to perform sending and receiving related operations of the terminal device in the foregoing method embodiments, and the processor 1101 is configured to perform processing-related operations of the terminal device in the foregoing method embodiments.

For example, the communication interface 1103 is configured to receive at least one video frame from a network device; the processor 1101 is configured to determine a video frame parameter based on the at least one video frame; and the communication interface 1103 is further configured to send the video frame parameter to the network device.

Optionally, the video frame parameter includes at least one of the following: a spread delay parameter, a frame gap parameter, a packet loss parameter, a late parameter, and base layer and enhancement layer parameters.

Optionally, the spread delay parameter indicates at least one of the following: a spread delay of a first video frame, an average spread delay of a plurality of video frames, a maximum spread delay of a plurality of video frames, a minimum spread delay of a plurality of video frames, and a variance of spread delays of a plurality of video frames, where the spread delay is a time length from a time when the terminal device successfully receives a first data packet of a video frame to a time when the terminal device successfully receives a last data packet of the video frame, and the first video frame or the plurality of video frames are one or more video frames of the at least one video frame received by the terminal device.

Optionally, the frame gap parameter indicates at least one of the following: a frame gap between adjacent video frames, an average value of a plurality of frame gaps, a maximum value of a plurality of frame gaps, a minimum value of a plurality of frame gaps, and a variance of a plurality of frame gaps, where the terminal device receives a plurality of video frames from the network device.

Optionally, the packet loss parameter includes at least one of the following: a quantity of video frames in which packet loss occurs, and a proportion of video frames in which packet loss occurs, where packet loss occurs in K consecutive video frames, and K is a positive integer greater than or equal to 1.

Optionally, the processor 1101 is further configured to determine whether packet data convergence protocol PDCP sequence numbers SNs of data packets included in a received video frame are consecutive; and determine that packet loss occurs in the video frame when PDCP SNs of the data packets included in the video frame received by the terminal device are non-consecutive.

Optionally, the late parameter indicates at least one of the following: a quantity of late video frames, a proportion of late video frames, a time difference between an actual receiving moment and a correct receiving moment of a late video frame, an average value of time differences between actual receiving moments and correct receiving moments of a plurality of late video frames, a maximum value of time differences between actual receiving moments and correct receiving moments of a plurality of late video frames, a minimum value of time differences between actual receiving moments and correct receiving moments of a plurality of late video frames, and a variance of time differences between actual receiving moments and correct receiving moments of a plurality of late video frames.

Optionally, each video frame includes base layer data and enhancement layer data; and the base layer and enhancement layer parameters include at least one of the following: a time difference between a time when the terminal device receives base layer data and a time when the terminal device receives enhancement layer data in a second video frame, where the second video frame is a video frame in the at least one video frame; at least one of a quantity of third video frames, a proportion of third video frames, or a quantity of lost packets at an enhancement layer in a third video frame, where the third video frame is a video frame in which packet loss does not occur in base layer data but occurs in enhancement layer data, and the third video frame is a video frame in the at least one video frame; and at least one of a quantity of fourth video frames, a proportion of fourth video frames, or a quantity of lost packets at a base layer in a fourth video frame, where the fourth video frame is a video frame in which packet loss does not occur in enhancement layer data but occurs in base layer data, and the fourth video frame is a video frame in the at least one video frame.

Optionally, the video frame includes one or more data slices after network coding is performed, and the video frame parameter further includes at least one of the following: a quantity of data slices that the terminal device needs to receive to successfully decode a video frame and/or a data volume of the data slices; a quantity of data slices that the terminal device needs to receive to successfully decode a base layer of a video frame and/or a data volume of the data slices; and a quantity of data slices that the terminal device needs to receive to successfully decode an enhancement layer of a video frame and/or a data volume of the data slices.

In another example, the apparatus 1100 is configured to implement the steps performed by the network device in the foregoing method embodiments. The communication interface 1103 is configured to perform sending and receiving related operations of the network device in the foregoing method embodiments, and the processor 1101 is configured to perform processing-related operations of the network device in the foregoing method embodiments.

For example, the communication interface 1103 is configured to send at least one video frame to a terminal device, where the communication interface 1103 is further configured to receive a video frame parameter from the terminal device, and the video frame parameter is determined based on the at least one video frame. Optionally, the processor 1101 may be configured to optimize transmission of a downlink video frame according to the video frame parameter.

Optionally, the video frame parameter includes at least one of the following: a spread delay parameter, a frame gap parameter, a packet loss parameter, a late parameter, and base layer and enhancement layer parameters.

Optionally, the spread delay parameter indicates at least one of the following: a spread delay of a first video frame, spread delays of a plurality of video frames, a maximum spread delay of a plurality of video frames, a minimum spread delay of a plurality of video frames, and a variance of spread delays of a plurality of video frames, where the spread delay is a time length from a time when the terminal device successfully receives a first data packet of a video frame to a time when the terminal device successfully receives a last data packet of the video frame, and the first video frame or the plurality of video frames are one or more video frames of the at least one video frame received by the terminal device.

Optionally, the frame gap parameter indicates at least one of the following: a frame gap between adjacent video frames, an average value of a plurality of frame gaps, a maximum value of a plurality of frame gaps, a minimum value of a plurality of frame gaps, and a variance of a plurality of frame gaps, where the terminal device receives a plurality of video frames from the network device.

Optionally, the packet loss parameter includes at least one of the following: a quantity of video frames in which packet loss occurs, and a proportion of video frames in which packet loss occurs, where packet loss occurs in K consecutive video frames, and K is a positive integer greater than or equal to 1.

Optionally, the late parameter indicates at least one of the following: a quantity of late video frames, a proportion of late video frames, a time difference between an actual receiving moment and a correct receiving moment of a late video frame, an average value of time differences between actual receiving moments and correct receiving moments of a plurality of late video frames, a maximum value of time differences between actual receiving moments and correct receiving moments of a plurality of late video frames, a minimum value of time differences between actual receiving moments and correct receiving moments of a plurality of late video frames, and a variance of time differences between actual receiving moments and correct receiving moments of a plurality of late video frames.

Optionally, each video frame includes base layer data and enhancement layer data; and the base layer and enhancement layer parameters include at least one of the following: a time difference between a time when the terminal device receives base layer data and a time when the terminal device receives enhancement layer data in a second video frame, where the second video frame is a video frame in the at least one video frame; at least one of a quantity of third video frames, a proportion of third video frames, or a quantity of lost packets at an enhancement layer in a third video frame, where the third video frame is a video frame in which packet loss does not occur in base layer data but occurs in enhancement layer data, and the third video frame is a video frame in the at least one video frame; and at least one of a quantity of fourth video frames, a proportion of fourth video frames, or a quantity of lost packets at a base layer in a fourth video frame, where the fourth video frame is a video frame in which packet loss does not occur in enhancement layer data but occurs in base layer data, and the fourth video frame is a video frame in the at least one video frame.

Optionally, the video frame includes one or more data slices after network coding is performed, and the video frame parameter further includes at least one of the following: a quantity of data slices that the terminal device needs to receive to successfully decode a video frame and/or a data volume of the data slices; a quantity of data slices that the terminal device needs to receive to successfully decode a base layer of a video frame and/or a data volume of the data slices; and a quantity of data slices that the terminal device needs to receive to successfully decode an enhancement layer of a video frame and/or a data volume of the data slices.

Further, an embodiment of this application further provides an apparatus, where the apparatus is configured to perform the method in the method embodiment in FIG. 5. A computer-readable storage medium is provided, including a program. When the program is run by a processor, the method in the foregoing method embodiment in FIG. 5 is performed. A computer program product is provided. The computer program product includes computer program code. When the computer program code is run on a computer, the computer is enabled to implement the method in the foregoing method embodiment in FIG. 5. A chip is provided, including a processor. The processor is coupled to a memory. The memory is configured to store a program or instructions. When the program or the instructions are executed by the processor, an apparatus is enabled to perform the method in the foregoing method embodiment in FIG. 5. A system is provided, including at least one of the terminal device and the network device that perform the foregoing method embodiments.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed through a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

All or some of the methods in embodiments of this application may be implemented through software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving, by a terminal device, at least one video frame from a network device;
determining, by the terminal device, a video frame parameter based on the at least one video frame; and
sending, by the terminal device, the video frame parameter to the network device.

2. The method according to claim 1, wherein the video frame parameter comprises at least one of the following:
a spread delay parameter, a frame gap parameter, a packet loss parameter, a late parameter, and base layer and enhancement layer parameters.

3. The method according to claim 2, wherein
the spread delay parameter indicates at least one of the following: a spread delay of a first video frame, an average spread delay of a plurality of video frames, a maximum spread delay of a plurality of video frames, a minimum spread delay of a plurality of video frames, and a variance of spread delays of a plurality of video frames, wherein the spread delay is a time length from a time when the terminal device successfully receives a first data packet of a video frame to a time when the terminal device successfully receives a last data packet of the video frame, and the first video frame or the plurality of video frames are one or more video frames of the at least one video frame received by the terminal device.

4. The method according to claim 2 or 3, wherein
the frame gap parameter indicates at least one of the following: a frame gap between adjacent video frames, an average value of a plurality of frame gaps, a maximum value of a plurality of frame gaps, a minimum value of a plurality of frame gaps, and a variance of a plurality of frame gaps, wherein the terminal device receives a plurality of video frames from the network device.

5. The method according to any one of claims 2 to 4, wherein the packet loss parameter comprises at least one of the following: a quantity of video frames in which packet loss occurs, and a proportion of video frames in which packet loss occurs, wherein packet loss occurs in K consecutive video frames, and K is a positive integer greater than or equal to 1.

6. The method according to claim 5, further comprising:
determining, by the terminal device, whether packet data convergence protocol PDCP sequence numbers SNs of data packets comprised in a received video frame are consecutive; and
determining that packet loss occurs in the video frame when PDCP SNs of the data packets comprised in the video frame received by the terminal device are non-consecutive.

7. The method according to any one of claims 2 to 6, wherein the late parameter indicates at least one of the following: a quantity of late video frames, a proportion of late video frames, a time difference between an actual receiving moment and a correct receiving moment of a late video frame, an average value of time differences between actual receiving moments and correct receiving moments of a plurality of late video frames, a maximum value of time differences between actual receiving moments and correct receiving moments of a plurality of late video frames, a minimum value of time differences between actual receiving moments and correct receiving moments of a plurality of late video frames, and a variance of time differences between actual receiving moments and correct receiving moments of a plurality of late video frames.

8. The method according to any one of claims 2 to 7, wherein
each video frame comprises base layer data and enhancement layer data; and
the base layer and enhancement layer parameters comprise at least one of the following:
a time difference between a time when the terminal device receives base layer data and a time when the terminal device receives enhancement layer data in a second video frame, wherein the second video frame is a video frame in the at least one video frame;
at least one of a quantity of third video frames, a proportion of third video frames, or a quantity of lost packets at an enhancement layer in a third video frame, wherein the third video frame is a video frame in which packet loss does not occur in base layer data but occurs in enhancement layer data, and the third video frame is a video frame in the at least one video frame; and
at least one of a quantity of fourth video frames, a proportion of fourth video frames, or a quantity of lost packets at a base layer in a fourth video frame, wherein the fourth video frame is a video frame in which packet loss does not occur in enhancement layer data but occurs in base layer data, and the fourth video frame is a video frame in the at least one video frame.

9. The method according to any one of claims 1 to 8, wherein the video frame comprises one or more data slices after network coding is performed, and the video frame parameter further comprises at least one of the following:
a quantity of data slices that the terminal device needs to receive to successfully decode a video frame and/or a data volume of the data slices;
a quantity of data slices that the terminal device needs to receive to successfully decode a base layer of a video frame and/or a data volume of the data slices; and
a quantity of data slices that the terminal device needs to receive to successfully decode an enhancement layer of a video frame and/or a data volume of the data slices.

10. A communication method, comprising:
sending, by a network device, at least one video frame to a terminal device; and
receiving, by the network device, a video frame parameter from the terminal device, wherein the video frame parameter is determined based on the at least one video frame.

11. The method according to claim 10, wherein the video frame parameter comprises at least one of the following:
a spread delay parameter, a frame gap parameter, a packet loss parameter, a late parameter, and base layer and enhancement layer parameters.

12. The method according to claim 11, wherein
the spread delay parameter indicates at least one of the following: a spread delay of a first video frame, spread delays of a plurality of video frames, a maximum spread delay of a plurality of video frames, a minimum spread delay of a plurality of video frames, and a variance of spread delays of a plurality of video frames, wherein the spread delay is a time length from a time when the terminal device successfully receives a first data packet of a video frame to a time when the terminal device successfully receives a last data packet of the video frame, and the first video frame or the plurality of video frames are one or more video frames of the at least one video frame received by the terminal device.

13. The method according to claim 11 or 12, wherein
the frame gap parameter indicates at least one of the following: a frame gap between adjacent video frames, an average value of a plurality of frame gaps, a maximum value of a plurality of frame gaps, a minimum value of a plurality of frame gaps, and a variance of a plurality of frame gaps, wherein the terminal device receives a plurality of video frames from the network device.

14. The method according to any one of claims 11 to 13, wherein the packet loss parameter comprises at least one of the following: a quantity of video frames in which packet loss occurs, and a proportion of video frames in which packet loss occurs, wherein packet loss occurs in K consecutive video frames, and K is a positive integer greater than or equal to 1.

15. The method according to any one of claims 11 to 14, wherein the late parameter indicates at least one of the following: a quantity of late video frames, a proportion of late video frames, a time difference between an actual receiving moment and a correct receiving moment of a late video frame, an average value of time differences between actual receiving moments and correct receiving moments of a plurality of late video frames, a maximum value of time differences between actual receiving moments and correct receiving moments of a plurality of late video frames, a minimum value of time differences between actual receiving moments and correct receiving moments of a plurality of late video frames, and a variance of time differences between actual receiving moments and correct receiving moments of a plurality of late video frames.

16. The method according to any one of claims 11 to 15, wherein
each video frame comprises base layer data and enhancement layer data; and
the base layer and enhancement layer parameters comprise at least one of the following:
a time difference between a time when the terminal device receives base layer data and a time when the terminal device receives enhancement layer data in a second video frame, wherein the second video frame is a video frame in the at least one video frame;
at least one of a quantity of third video frames, a proportion of third video frames, or a quantity of lost packets at an enhancement layer in a third video frame, wherein the third video frame is a video frame in which packet loss does not occur in base layer data but occurs in enhancement layer data, and the third video frame is a video frame in the at least one video frame; and
at least one of a quantity of fourth video frames, a proportion of fourth video frames, or a quantity of lost packets at a base layer in a fourth video frame, wherein the fourth video frame is a video frame in which packet loss does not occur in enhancement layer data but occurs in base layer data, and the fourth video frame is a video frame in the at least one video frame.

17. The method according to any one of claims 10 to 16, wherein the video frame comprises one or more data slices after network coding is performed, and the video frame parameter further comprises at least one of the following:
a quantity of data slices that the terminal device needs to receive to successfully decode a video frame and/or a data volume of the data slices;
a quantity of data slices that the terminal device needs to receive to successfully decode a base layer of a video frame and/or a data volume of the data slices; and
a quantity of data slices that the terminal device needs to receive to successfully decode an enhancement layer of a video frame and/or a data volume of the data slices.

18. An apparatus, comprising units configured to perform the steps of the method according to any one of claims 1 to 9, or comprising units configured to perform the steps of the method according to any one of claims 10 to 17.

19. An apparatus, comprising at least one processor and an interface circuit, wherein the at least one processor is configured to communicate with another apparatus through the interface circuit, and perform the method according to any one of claims 1 to 9 or perform the method according to any one of claims 10 to 17.

20. An apparatus, comprising a processor, configured to invoke a program stored in a memory, to perform the method according to any one of claims 1 to 9, or perform the method according to any one of claims 10 to 17.

21. A computer-readable storage medium, comprising a program, wherein when the program is run by a processor, the method according to any one of claims 1 to 9 is performed, or the method according to any one of claims 10 to 17 is performed.
